# EUROPÄISCHE PATENTSCHRIFT

(11) **EP 0 276 776 B1**
(45) Veröffentlichungstag und Bekanntmachung des Hinweises auf die Patenterteilung: **22.06.1994**
(21) Anmeldenummer: 88100907.0
(22) Anmeldetag: 22.01.1988
(51) Int. Cl.: H04Q 11/04, H04L 12/54, H04L 12/58

(54) **Digitales Koppelnetz für Leitungs- und Paketvermittlung und Koppelfeldbaustein hierzu**
Digital switching network for circuit and packet switching, and switching matrix element therefor
Réseau numérique de commutation pour la commutation en circuit et en paquet, et matrice de couplage correspondante

(30) Priorität: 29.01.1987 DE 3702614
(43) Veröffentlichungstag der Anmeldung: 03.08.1988
(73) Patentinhaber: Alcatel SEL Aktiengesellschaft, D-70435 Stuttgart (DE)
(72) Erfinder: Böttle, Dietrich, D-7335 Salach (DE); Preisach, Helmuth, D-7141 Murr (DE); Schrodi, Karl, D-7258 Heimsheim (DE)
(74) Vertreter: Brose, Gerhard, Dipl.-Ing.

(56) Entgegenhaltungen:
- EP-A- 0 126 413
- FR-A- 2 621 768
- INTERNATIONAL SWITCHING SYMPOSIUM, Phoenix, Arizona, 15.-20. März 1987, Band 4,1987, Seiten A10.3.1-A10.3.5, IEEE, New York, US; J. VAN BAARDEWIJK: "Anexperimental all-in-one multiservice broadband switch"
- IBM TECHNICAL DISCLOSURE BULLETIN, Band 28, Nr. 2, Juli 1985, Seiten 510-512,New York, US; "Fast set-up time circuit switch with distributed control"
- IBM TECHNICAL DISCLOSURE BULLETIN, Band 29, Nr. 8, Januar 1987, Seiten 3626-3627, New York, US; "Frame switching node architecture"

## Beschreibung

Die Erfindung betrifft ein digitales Koppelnetz nach dem Oberbegriff des Anspruchs 1 und einen Koppelfeldbaustein nach dem Oberbegriff des Anspruchs 2.

Die Übermittlung von Nachrichten erfolgt in zunehmendem Maße mit Hilfe digital arbeitender Einrichtungen. Außerdem gewinnt die Übermittlung von Daten immer mehr an Bedeutung. Es wird deshalb für die Zukunft ein Kommunikationsnetz angestrebt, das für die Vermittlung unterschiedlicher Nachrichten gleichermaßen geeignet ist. Die zu integrierenden Dienste unterscheiden sich in vielfältiger Weise. Beispielsweise kann zwischen solchen Diensten unterschieden werden, bei denen während verhältnismäßig kurzer Zeiträume ein einigermaßen stetiger Informationsfluß herrscht und solchen Diensten, bei denen über längere Zeiträume hinweg immer wieder kurzfristig Informationen fließen. Daran angepaßt gibt es zwei verschiedene Vermittlungsverfahren. Ein Vermittlungsverfahren, bei dem zwischen den beteiligten Endeinrichtungen für die Dauer einer Verbindung ein unmittelbarer Übertragungsweg zur Verfügung gestellt wird, unabhängig davon, ob Informationen übertragen werden oder nicht, wird als Durchschaltevermittlung oder Leitungsvermittlung, englisch: circuit switching, bezeichnet. Ein Vermittlungsverfahren,bei dem die Nachrichten in Pakete zerlegt anhand einer im Nachrichtenkopf angegebenen Zielinformation abschnittsweise durch das Datennetz geschleust werden, wird als Paketvermittlung, englisch:packet switching, bezeichnet. Die Pakete werden dabei jeweils zwischengespeichert, bis ein Weg in einer weiterführenden Richtung frei wird. Ein Durchschalten von Übertragungswegen findet nicht statt. Ein Sonderfall ist die Teilstreckenvermittlung oder Speichervermittlung, bei der, beispielsweise beim elektronischen Briefdienst, ungeteilte Sendungen abschnittsweise von Vermittlungsstelle zu Vermittlungsstelle durch das Datennetz geschleust werden. Zur Begriffsbestimmung wird auf die NTG-Empfehlung 0902 von 1982, Punkt 4.2.1 und Punkt 4.2.2, veröffentlicht in der ntz, Heft 8/82, auf Seite 549, verwiesen. Die Vermittlungseinrichtungen müssen an das jeweilige Vermittlungsverfahren angepaßt sein.

Ein Weg, um sowohl Leitungsvermittlung als auch Paketvermittlung betreiben zu können, wird von A.Chalet und R.Drignath im Artikel "Datenmodul-Architektur mit Paketverarbeitungsfunktionen" (Elektrisches Nachrichtenwesen Band 59, Nr. 1/2, 1985) beschrieben. Hiervon geht die vorliegende Erfindung aus. Gemäß dem beschrieben Vorschlag soll Paketvermittlung so erfolgen, daß jedes Datenpaket zunächst am Eingang der Vermittlungsstelle in einem Paketspeicher abgelegt wird, dann wie bei Leitungsvermittlung ein Weg durch das Koppelnetz durchgeschaltet wird, dann das Datenpaket auf diesem Weg übermittelt wird und anschließend dieser Weg wieder abgebaut wird. Um das Durchschalten eines Wegs für jedes einzelne Datenpaket zu beschleunigen werden vorab in einer Verbindungsaufbauphase die für das Durchschalten erforderlichen Parameter, insbesondere eine Zieladresse, ermittelt und so abgespeichert, daß sie beim Eintreffen eines Datenpakets sofort verfügbar sind.

Die Gleichbehandlung einzelner Pakete einer paketvermittelten Verbindung mit einer leitungsvermittelten Verbindung ist auch bekannt aus IBM Technical Disclosure Bulletin, Vol. 28, No. 2, July 1985, Seiten 510 bis 512.

Ein gänzlich anderer Vorschlag wurde von John J.Kulzer und Warren A.Montgomery auf der ISS'84 Florence, 7-11 May 1984 unter dem Titel "Statistical Switching Architectures for Future Services" vorgestellt (Session 43 A Paper 1). Ein ähnlicher Vorschlag wurde von A.Thomas et al in der selben Konferenz unterbreitet: "Asynchronous Time-Division Techniques: an Experimental Packet Network Integrating Videocommunication" (Session 32 C Paper 2). Gemäß diesen Vorschlägen sollen sämtliche Informationen, von sporadisch auftretenden Einzelbefehlen bis hin zu digitalisierten Bewegtbildsignalen, in Datenpakete zerlegt und mittels Paketvermittlung weitergegeben werden. Gemäß Bild 6 des Kulzer-Artikels mit zugehöriger Beschreibung werden dabei die einzelnen Datenpakete innerhalb einer Vermittlungsstelle von Stufe zu Stufe weitergegeben und dort auch bei Bedarf zwischengespeichert.

Beide Lösungen weisen sowohl Vor- als auch Nachteile auf. Sind Signale mit hoher Übertragungsgeschwindigkeit zu vermitteln (sogenannte Breitbandvermittlung), so wiegen manche Vor- oder Nachteile besonders schwer.

Die Erfindung stellt durch ein Koppelnetz nach Anspruch 1 und einen Koppelfeldbaustein nach Anspruch 2 eine weitere Lösung zur Verfügung,die viele Vorteile in sich vereinigt, ohne alle Nachteile in Kauf nehmen zu müssen.

Ein digitales Koppelnetz ist erfindungsgemäß so ausgestaltet, daß von einem beliebigen Eingang zu einem beliebigen Ausgang führende Wege je nach Bedarf entweder für leitungsvermittelte Verbindungen durchgeschaltet oder für paketvermittelte Nachrichten (Datenpakete) voreingestellt werden können. Zu jedem Zeitpunkt bilden die für paketvermittelte Nachrichten voreingestellten Wege ein Netz, dessen Knoten in den Koppelfeldbausteinen des Koppelnetzes liegen. Die Koppelfeldbausteine weisen diejenigen Funktionseinrichtungen auf, die erforderlich sind, um jedes Datenpaket auf dem dafür voreingestellten Weg zu vermitteln.

Dadurch ist es möglich, ein einziges Koppelnetz je nach Bedarf dynamisch in ein Durchschaltevermittlungsnetz und ein Paketvermittlungsnetz aufzuteilen
Nicht nur die Struktur eines solchen Koppelnetzes, sondern auch der Aufbau mit Leiterplatten, Steckverbindungen, Gestellen und Verdrahtung ist im wesentlichen gleich wie bei einem reinen Durchschaltevermittlungsnetz oder einem reinen Paketvermittlungsnetz. Ein gegenüber dem reinen Durchschaltevermittlungsnetz oder dem reinen Paketvermittlungsnetz zusätzlicher Aufwand entsteht nur in denjenigen Baugruppen,in denen die Koppelpunkte selbst enthalten sind. Diese Baugruppen, die als Koppelfeldbausteine nach Anspruch 2 oder 3 ausgeführt sein können, werden aber in modernen Vermittlungseinrichtungen ohnehin als hochintegrierte Schaltkreise ausgeführt. Der erfindungsgemäß zusätzlich erforderliche Aufwand führt dann zwar zu einem etwas aufwendigeren Schaltkreis, aber bereits die Anzahl und Anordnung der Anschlüsse kann unverändert sein. Allenfalls die Ansteuerung eines solchen Koppelfeldbausteins, die aber programmgesteuert erfolgt oder die Stromversorgung erfordern zusätzlichen höheren Aufwand. Mit diesem geringfügigen Mehraufwand können dann aber je nach Bedarf paketvermittelte oder leitungsvermittelte Verbindungen aufgebaut werden.

Im folgenden wird die Erfindung anhand eines Ausführungsbeispiels unter Zuhilfenahme der beiliegenden Zeichnung weiter erläutert.

Die Erfindung wird erklärt am Beispiel eines Raumvielfach-Breitbandkoppelnetzes, bei dem die Koppelfeldbausteine als integrierte Breitbandkoppelfeldbausteine ausgeführt sind. Dabei wird zunächst der Koppelfeldbaustein (die Koppeleinrichtung) und dann das Koppelnetz beschrieben. Die Erfindung beschränkt sich aber weder auf Breitbandanwendungen (korrekter: Anwendungen mit hoher Übertragungsgeschwindigkeit) noch auf die Vermittlung im Raummultiplex. Die hier verwendeten Begriffe wie Eingang, Ausgang, Kanal, Weg, Verbindung können also sowohl im Zusammenhang mit Anschlußstiften oder Leiterbahnen gesehen werden, wie auch im Zusammenhang mit Zeitschlitzen in einem Zeitmultiplexsignal.

Die Figur zeigt ein Blockschaltbild eines Breitbandkoppelfeldbausteins 40 als Beispiel einer erfindungsgemäßen Koppeleinrichtung. Der Breitbandkoppelfeldbaustein 40 weist 16 Signaleingänge E1 ... E16 und einen Takteingang TE auf. Diesen Eingängen nachgeschaltet ist ein Eingangstrennverstärker 3. Für diejenigen Signale, die von den Signaleingängen E1 ... E16 kommen, ist dem Eingangstrennverstärker 3 eine Eingangssynchronisationseinrichtung 1 nachgeschaltet. Der Eingangssynchronisationseinrichtung 1 wird außerdem der vom Takteingang TE kommende und im Eingangstrennverstärker 3 aufbereitete Takt T zugeführt. An den Ausgängen der Eingangssynchronisationseinrichtung 1 liegen damit bitsynchrone Digitalsignale an. Diese Ausgänge sind mit den Spaltenleitungen einer Koppelmatrix K verbunden. Die Zeilenleitungen dieser Koppelmatrix K sind mit Eingängen einer Ausgangssynchronisationseinrichtung 2 verbunden, in der die Signale wieder auf den Takt T (bit-)synchronisiert werden. Diese Signale gelangen, wie auch der Takt T, über einen Ausgangstrennverstärker 4 zu Signalausgängen A1 ... A16 und einem Taktausgang TA. An den Kreuzungen von Spaltenleitungen und Zeilenleitungen in der Koppelmatrix K liegen Koppelpunkte, die von einer Decodier- und Steuereinrichtung 6 angesteuert werden (Doppellinien in der Figur). Die Steuerung und Überwachung des Breitbandkoppelfeldbausteins 40 erfolgt über einen Steuerbus BUS mittels der Decodier- und Steuereinrichtung 6.

Dieser Breitbandkoppelfeldbaustein 40, der so wie oben beschrieben alle für die Leitungsvermittlung erforderlichen Einrichtungen aufweist, wird nun noch durch solche Einrichtungen ergänzt, die alternativ eine Paketvermittlung zulassen. Als wichtigste Einheit ist hierfür eine Datenpaket-Behandlungseinheit P vorhanden. Im Ausführungsbeispiel wird davon ausgegangen, daß maximal ein Viertel der Signalwege für Paketvermittlung benötigt wird. Die Datenpaket-Behandlungseinheit P enthält deshalb 4 Untereinheiten P1...P4, die je einen Signaleingang aufweisen, der mittels einer ersten Paketkoppelmatrix PK1 bei Bedarf mit einer von einem der Signaleingänge E1...E16 kommenden Spaltenleitung verbunden werden kann. Sind gleichviele Untereinheiten vorhanden, wie Signaleingänge, dann entfällt die erste Paketkoppelmatrix PK1 zugunsten von festen Verbindungen.

Da Einrichtungen für Paketvermittlung als solche bekannt sind, sind auch die Aufgaben und der grundsätzliche Aufbau der Datenpaket-Behandlungseinheit P und der darin enthaltenen Untereinheiten P1 ... P4 grundsätzlich bekannt. Die Hauptaufgabe der Behandlungseinheit P besteht darin, für jedes einzelne Datenpaket den weiteren Weg zu bestimmen und es dann auch auf diesem Weg, d. h. zu einem ganz bestimmten Signalausgang A1 ... A16, weiterzuleiten.

Dafür ist zunächst erforderlich, daß die Datenpakete als solche erkannt werden, wozu zumindest der Beginn eines neuen Datenpakets erkannt werden muß. Für diese Synchronisationsaufgabe stehen beliebig viele Lösungen zur Verfügung. Jedes Datenpaket besteht grundsätzlich aus zwei Teilen. Der erste Teil, der üblicherweise auch zeitlich der erste ist, und dem Datenpaket als Kopfteil vorangeht, enthält alle zur Steuerung des Informationsaustausches erforderlichen Angaben. Der zweite Teil enthält die Information selbst. Der erste Teil (Kopfteil) muß zumindest diejenigen Angaben enthalten, die zum Ermitteln des weiteren Weges erforderlich sind. Er kann darüber hinaus z.B. der Synchronisation dienen oder Angaben über den Absender enthalten. Ob der Kopfteil des Datenpakets auf dem ganzen Weg vom Absender zum Empfänger unverändert bleibt und hierfür auch dann alle erforderlichen Informationen enthält, oder ob der Kopfteil abschnittsweise durch voreingestellte Information erneuert wird, ist für die vorliegende Erfindung ohne Bedeutung. Beispielsweise könnten bei vorgegebener Länge eines Datenpakets alle Datenpakete im gesamten Koppelnetz untereinander synchron sein, wodurch es dann möglich wäre, allen Breitbandkoppelfeldbausteinen des Koppelnetzes von außen ein Signal zuzuführen, das den Beginn eines Datenpakets kennzeichnet. Wenn dann am Eingang des Koppelnetzes das Datenpaket mit einem derartigen Kopfteil versehen wird, das für jede Stufe des Koppelnetzes und damit für jeden durchlaufenen Breitbandkoppelfeldbaustein 40 zwei Bits aufweist, mit denen jeweils einer der vier möglichen Signalausgänge ausgewählt wird, so kann die Behandlungseinheit P sehr einfach ausgeführt sein. Die Behandlungseinheit P ist dann in der Lage den Zeitpunkt zu erkennen, zu dem die für diesen Breitbandkoppelfeldbaustein bestimmten zwei Adressbits auftauchen. Diese und die vorangegangenen Adressbits, die für die Adressierung der vorangegangenen Stufen benötigt wurden, brauchen nicht an die nachfolgenden Stufen weitergegeben zu werden. Es genügt deshalb, wenn das Datenpaket erst dann auf den richtigen Signalausgang durchgeschaltet wird, wenn diese beiden Adressbits ausgewertet wurden. In diesem Fall kann die Durchschaltung in der Koppelmatrix K erfolgen. Die Behandlungseinheit P muß dann in einem Adressdecoder PA aus den beiden erhaltenen Adressbits einen der 16 Signalausgänge A1 ... A16 auswählen und die Decodier- und Steuereinrichtung 6 veranlassen, den entsprechenden Koppelpunkt der Koppelmatrix K durchzuschalten.

Eine derart einfach aufgebaute Behandlungseinheit P genügt aber in der Praxis nur recht einfachen Anforderungen. Hier treten schon dann Verluste auf, wenn zwei Datenpakete, die gleichzeitig an zwei verschiedenen Signaleingängen E1 ... E16 ankommen, auf demselben Signalausgang weitergeleitet werden müssen. In diesem Fall sollte dasjenige Datenpaket, das nicht sofort durchgeschaltet werden kann, zwischengespeichert und anschließend weitergegeben werden. Dies setzt entsprechende Zwischenspeicher in den Untereinheiten P1 ... P4 voraus. Weiter ist von den Untereinheiten P1 ... P4 eine Ausgabemöglichkeit zu den Signalausgängen A1 ... A16 erforderlich. Zu diesem Zweck ist eine zweite Paketkoppelmatrix PK2 vorhanden. Die Koppelpunkte dieser zweiten Paketkoppelmatrix PK2 werden dann von der Decodier- und Steuereinrichtung 6 aus angesteuert.

Die Dimensionierung der Zwischenspeicher in den Untereinheiten P1 ... P4 hängt ab vom erwarteten Verkehrsaufkommen und von der geforderten Verkehrsgüte. Je mehr Verkehrsaufkommen zu erwarten ist und je höher die Verkehrsgüte sein soll, desto größer müssen die Zwischenspeicher sein. Grundsätzlich können die Zwischenspeicher jedoch nicht so dimensioniert werden, daß mit Sicherheit kein ankommendes Datenpaket verloren geht. Notfalls muß deshalb z.B. in den Endgeräten dafür gesorgt werden, daß die verloren gegangenen Datenpakete nachgeliefert werden können. Unter Umständen kann auch eine sich ankündigende oder bereits vorhandene Überlastung durch die Decodier-und Steuereinrichtung 6 über den Steuerdatenbus BUS nach außen gemeldet werden, um weitere Wege zur Vermittlung von Datenpaketen anzufordern. Hierfür können dann auch zumindest abschnittsweise durchgeschaltete Wege verwendet werden.

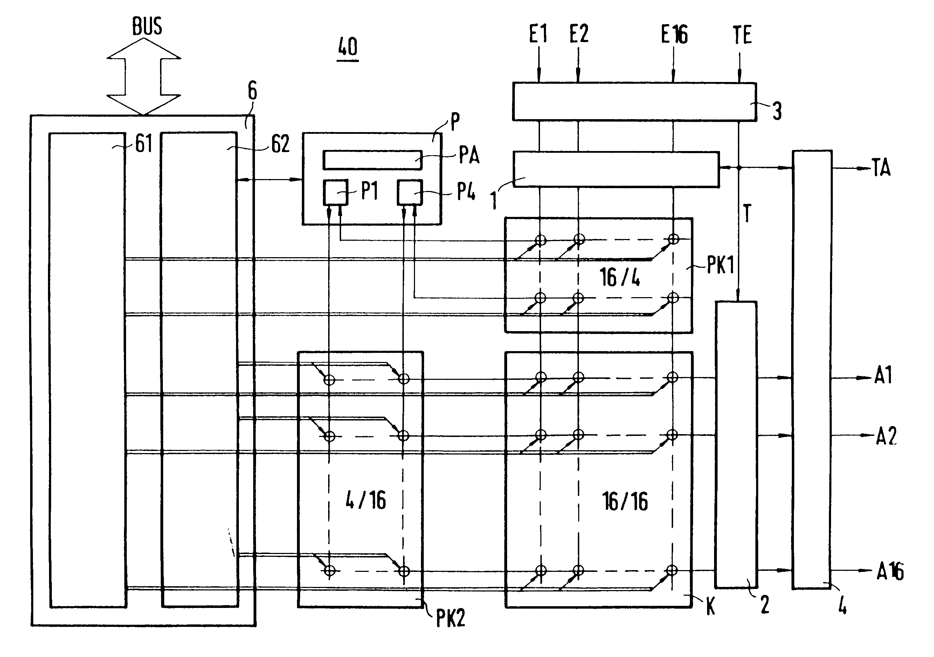

Zwischenspeicher sind aber beispielsweise auch dann erforderlich, wenn der Beginn eines Datenpakets erst aus dem Inhalt des ankommenden Datenstroms ermittelt werden muß und wenn trotzdem das ganze Datenpaket durchgeschaltet werden muß. Soll die Paketvermittlung beispielsweise so erfolgen, wie in dem eingangs genannten Artikel von A.Thomas et al anhand der dortigen Figur 9 beschrieben, so sind auch die hierfür erforderlichen Funktionseinheiten zum Synchronisieren in den Untereinheiten P1 ... P4 erforderlich. In diesem Fall, bei dem die Datenpakete so verzögert werden, daß innerhalb eines Breitbandkoppelfeldbausteins 40 jeweils nur der Kopfteil eines einzigen Datenpaketes zu bearbeiten ist, kann der Aufwand in der Behandlungseinheit P und der Decodier- und Steuereinrichtung 6 verhältnismäßig gering gehalten werden. Beispielsweise genügt es, wenn der Adressdecoder PA jeweils nur von einer der Untereinheiten P1 ... P4 ansprechbar ist. Auch muß die Decodier- und Steuereinrichtung 6 in der zweiten Paketkoppelmatrix PK2 nie zwei Koppelpunkte gleichzeitig ansteuern. Auch wenn der Kopfteil eines Datenpakets jeweils nur Adressangaben für einen Teilabschnitt enthält und in der Behandlungseinheit P umadressiert werden muß, dann ist der Aufwand für die hierfür erforderlichen Baugruppen geringer, wenn nie zwei Kopfteile gleichzeitig bearbeitet werden müssen.

Beim Ausführungsbeispiel, das einen Breitbandkoppelfeldbaustein darstellt, bei dem also mit hoher Übertragungsgeschwindigkeit gearbeitet wird, muß bei der erfindungsgemäßen Kombination von Leitungsvermittlung und Paketvermittlung im Gegensatz zu einer reinen Leitungsvermittlung auch die Ansteuerung der Koppelpunkte schnell erfolgen können. Zumindest ein Teil der Decodier- und Steuereinrichtung 6 muß deshalb mit einer Geschwindigkeit arbeiten können, die etwa der Übertragungsgeschwindigkeit entspricht. Die Decodier- und Steuereinrichtung 6 ist deshalb in einen langsamen Teil 61 und einen schnellen Teil 62 unterteilt. Die Ansteuerung der Koppelpunkte in der ersten Paketkoppelmatrix PK1 und in der Koppelmatrix K erfolgt vom langsamen Teil 61 aus, die der zweiten Paketkoppelmatrix PK2 vom schnellen Teil 62 aus. Die Datenpaket-Behandlungseinheit P arbeitet in erster Linie mit dem schnellen Teil 62 zusammen.

Bei einem erfindungsgemäßen digitalen Koppelnetz können nun die beschriebenen Breitbandkoppelfeldbausteine als Koppeleinrichtungen verwendet werden. Durch eine irgendwie geartete zentrale oder dezentrale Steuerung können nun in bekannter Weise wahlfrei Wege für leitungsvermittelte Verbindungen durchgeschaltet werden. Alternativ dazu können nun solche Wege auch für paketvermittelte Nachrichten voreingestellt werden. Dazu muß dann in jedem Breitbandkoppelfeldbaustein, durch den ein solcher Weg führen soll, durch die erste Paketkoppelmatrix PK1 eine der Untereinheiten P1 ... P4 der Behandlungseinheit P mit diesem Weg verbunden werden. Außerdem müssen dann in den Adressdecoder PA diejenigen Daten eingegeben werden, die zum richtigen Weiterleiten der auf dem voreinzustellenden Weg später zu vermittelnden Datenpakete erforderlich sind.

## Patentansprüche

1. Digitales Koppelnetz mit einer Vielzahl von Eingängen und Ausgängen und mit einer Vielzahl von Koppelfeldbausteinen (40), über die wahlfrei Wege für leitungsvermittelte Verbindungen von je einem Eingang zu je einem Ausgang durchschaltbar sind, und in dem auch Wege für einzelne Datenpakete schaltbar sind,
**dadurch gekennzeichnet**, daß jeder Koppelfeldbaustein eine Mehrzahl von Eingangskanälen (E1 ... E16), eine Mehrzahl von Ausgangskanälen (A1 ... A16), eine Koppelpunktmatrix (K) mit Koppelelementen zur wahlfreien Verbindung von Ausgangskanälen mit Eingangskanälen, eine Steuereinrichtung (6) zum Herstellen leitungsvermittelter Verbindungen durch Ansteuern von Koppelelementen und eine Datenpaket-Behandlungseinheit (P) aufweist, daß in jedem Koppelfeldbaustein jeder Eingangskanal (E1 ... E16) mit einem Eingang der Datenpaket-Behandlungseinheit (P) verbunden ist oder daß Koppelelemente (PK1) vorhanden sind, die jeden Eingang der Datenpaket-Behandlungseinheit (P) wahlweise mit einem Eingangskanal (E1 ... E16) verbindbar machen, daß die Steuereinrichtung (6) so ausgestaltet ist, daß sie einzelne Eingänge der Datenpaket-Behandlungseinheit (P), die mit einem Eingangskanal (E1 ... E16) verbunden sind, aktiviert und damit für paketvermittelte Nachrichten voreinstellt bzw. zum Zwecke der Aktivierung und Voreinstellung mit ausgewählten Eingangskanälen (E1 ... E16) verbindet, daß die Datenpaket-Behandlungseinheit einen Adressdecoder (PA) enthält, der so ausgebildet ist, daß er aus der in einem Kopfteil eines Datenpakets enthaltenen Information eine Adresse ableitet und daraus denjenigen Ausgangskanal (A1 ... A16) ermittelt, über den dieses Datenpaket die Koppeleinrichtung (40) wieder verlassen soll und daß die Steuereinrichtung (6) weiter so ausgestaltet ist, daß sie durch die Datenpaket-Behandlungseinheit (P) veranlaßt wird, für die Dauer dieses Datenpakets eine Verbindung vom betroffenen Eingangskanal (E1 ... E16) zum betroffenen Ausgangskanal (A1 .. A16) herzustellen.

2. Koppelfeldbaustein mit einer Mehrzahl von Eingangskanälen (E1 ... E16), einer Mehrzahl von Ausgangskanälen (A1 ... A16) und einer Steuereinrichtung (6) zum Herstellen wahlfreier leitungsvermittelter Verbindungen von Ausgangskanälen mit Eingangskanälen und zum Schalten von Wegen für einzelne Datenpakete,
**dadurch gekennzeichnet**, daß eine Datenpaket-Behandlungseinheit (P) enthalten ist, daß jeder Eingangskanal (E1 ... E16) mit einem Eingang der Datenpaket-Behandlungsheit (P) verbunden ist oder daß Koppelelemente (PK1) vorhanden sind, die jeden Eingang der Datenpaket-Behandlungseinheit (P) wahlweise mit einem Eingangskanal (E1 ... E16) verbindbar machen, daß die Steuereinrichtung (6) so ausgestaltet ist, daß sie einzelne Eingänge der Datenpaket-Behandlungseinheit (P), die mit einem Eingangskanal (E1 ... E16) verbunden sind, aktiviert und damit für paketvermittelte Nachrichten voreinstellt bzw. zum Zwecke der Aktivierung und Voreinstellung mit ausgewählten Eingangskanälen (E1 ... E16) verbindet, daß die Datenpaket-Behandlungseinheit einen Adressdecoder (PA) enthält, der so ausgebildet ist, daß er aus der in einem Kopfteil eines Datenpakets enthaltenen Information eine Adresse ableitet und daraus denjenigen Ausgangskanal (A1 ... A16) ermittelt, über den dieses Datenpaket die Koppeleinrichtung (40) wieder verlassen soll und daß die Steuereinrichtung (6) weiter so ausgestaltet ist, daß sie durch die Datenpaket-Behandlungseinheit (P) veranlaßt wird, für die Dauer dieses Datenpakets eine Verbindung vom betroffenen Eingangskanal (E1 ... E16) zum betroffenen Ausgangskanal (A1 ... A16) herzustellen.

3. Koppelfeldbaustein nach Anspruch 2, dadurch gekennzeichnet, daß die Datenpaket-Behandlungseinheit (P) einen Ausgang aufweist, der über Koppelelemente (PK2) wahlweise mit jedem der Ausgangskanäle (A1 ... A16) verbindbar ist, daß die Datenpaket-Behandlungseinheit (P) weiter so ausgestaltet ist, daß das Datenpaket auf dem Weg vom betroffenen Eingangskanal (E1 ... E16) zum betroffenen Ausgangskanal (A1 ... A16) die Datenpaket-Behandlungseinheit (P) durchläuft und daß die Datenpaket-Behandlungseinheit (P) Funktionseinheiten zum Synchronisieren, Zwischenspeichern oder Umadressieren enthält.

## Claims

1. A digital switching network having a plurality of inlets and outlets and a plurality of switching modules (40) through which paths for circuit-switched connections are switchable from any inlet to any outlet, and wherein also paths for individual data packets are switchable,
**characterized in** that each switching module has a plurality of input channels (E1...E16), a plurality of output channels (A1...A16), a switching matrix (K) comprising switching elements for connecting any output channel with any input channel, a control logic (6) for establishing circuit-switched connections by activating switching elements, and a packet-handling unit (P), that in each switching module, each input channel (E1...E16) is connected to one input of the packet-handling unit (P) or that switching elements (PK1) are provided which make any input of the packet-handling unit (P) connectable to any input channel (E1...E16), that the control logic (6) is designed to activate individual packet-handling-unit inputs connected to an input channel (E1...E16), thereby presetting said individual inputs for packet-switched messages, or to connect said individual inputs, for purposes of activation and presetting, to selected input channels (E1...E16), respectively, that the packet-handling unit includes an address decoder (PA) designed to derive an address from the information contained in a header of a data packet and to determine therefrom that output channel (A1...A16) over which the data packet is to leave the switching module (40), and that the control logic (6) is further designed to be caused by the packet-handling unit (P) to establish, for the duration of the data packet, a connection from the selected input channel (E1...E16) to the determined output channel (A1...A16).

2. A switching module having a plurality of input channels (E1...E16), a plurality of output channels (A1...A16), and a control logic (6) for establishing circuit-switched connections between any output channel and any input channel and for switching paths for individual data packets,
**characterized in** that the switching module includes a packet-handling unit (P), that each input channel (E1...E16) is connected to one input of the packet-handling unit (P) or that switching elements (PK1) are provided which make any input of the packet-handling unit (P) connectable to any input channel (E1...E16), that the control logic (6) is designed to activate individual packet-handling-unit inputs connected to an input channel (E1...E16), thereby presetting said individual inputs for packet-switched messages, or to connect said individual inputs for purposes of activation and presetting to selected input channels (E1...E16), respectively, that the packet-handling unit includes an address decoder (PA) designed to derive an address from the information contained in a header of a data packet and to determine therefrom that output channel (A1...A16) over which the data packet is to leave the switching module (40), and that the control logic (6) is further designed to be caused by the packet-handling unit (P) to establish, for the duration of the data packet, a connection from the selected input channel (E1...E16) to the determined output channel (A1...A16).

3. A switching module as claimed in claim 2, characterized in that the packet-handling unit (P) has an output which is connectable via switching elements (PK2) with any of the output channels (A1...A16), that the packet-handling unit (P) is further designed so that on its way from the selected input channel (E1...E16) to the determined output channel (A1...A16), the data packet passes through the packet-handling unit (P), and that the packet-handling unit (P) includes functional units for synchronization, buffering or address modification.

## Revendications

1. Réseau de connexion numérique comportant une pluralité d'entrées et de sorties et une pluralité de modules de connexion (40) par l'intermédiaire desquels on peut former au choix des chemins de raccordement direct, de chacune des entrées à chacune des sorties, pour obtenir des liaisons par commutation de circuits et réseau dans lequel des chemins peuvent également être obtenus pour des paquets de données isolés, réseau caractérisé par le fait que chaque module de connexion présente une pluralité de canaux d'entrée (E1 ... E16), une pluralité de canaux de sortie (A1 ... A16), une matrice (K) de points de connexion avec des éléments de connexion pour réaliser, au choix, la liaison des canaux de sortie avec les canaux d'entrée, un dispositif de commande (6) pour réaliser des liaisons à commutation de circuits par excitation des éléments de connexion, ainsi qu'une unité de traitement (P) des paquets de données, par le fait que dans chaque module de connexion, chaque canal d'entrée (E1 ... E16) est relié à une entrée de l'unité de traitement (P) des paquets de données ou qu'il y a des éléments de connexion (PK1) qui peuvent relier, au choix, chaque entrée de l'unité de traitement (P) des paquets de données avec un canal d'entrée (E1 ... E16), par le fait que le dispositif de commande (6) est réalisé de façon à activer différentes entrées de l'unité de traitement (P) des paquets de données, qui sont reliées avec un canal d'entrée (E1 ... E16), et donc à les prédéterminer pour des informations transmises par commutation par paquets ou à les relier avec des canaux d'entrée (E1 ... E16) choisis aux fins d'activation et de prédétermination, par le fait que l'unité de traitement des paquets de données contient un décodeur d'adresses (PA) qui est conçu de façon à dériver une adresse à partir de l'information contenue dans un en-tête d'un paquet de données et à en déterminer le canal de sortie (A1 ... A16) par lequel ce paquet de données doit à nouveau quitter le dispositif de connexions (40) et par le fait que le dispositif de commande (6) est en outre réalisé de façon à être amené, par l'unité de traitement (P) des paquets de données, à réaliser, pour la durée de ce paquet de données, une liaison depuis le canal d'entrée en question (E1 ...E16) jusqu'au canal de sortie en question (A1 ... A16).

2. Module de connexion comportant une pluralité de canaux d'entrée (E1 ... E16), une pluralité de canaux de sortie (A1 ...A16) et un dispositif de commande (6) pour réaliser au choix des liaisons par commutation de circuits entre les canaux de sortie et les canaux d'entrée et pour obtenir des chemins pour les différents paquets de données, module caractérisé par le fait qu'il contient une unité de traitement (P) des paquets de données, que chaque canal d'entrée (E1 ... E16) est relié avec une entrée de l'unité de traitement (P) des paquets de données ou qu'il y a des éléments de connexion (PK1) qui peuvent relier au choix chaque entrée de l'unité de traitement (P) des paquets de données avec un canal d'entrée (E1 ... E16), par le fait que le dispositif de commande (6) est réalisé de façon à activer différentes entrées de l'unité de traitement (P) des paquets de données, qui sont reliées avec un canal d'entrée (E1 ... E16), et donc à les prédéterminer pour des informations transmises par commutation par paquets ou à les relier avec des canaux d'entrée (E1 ... E16) choisis aux fins d'activation et de prédétermination, par le fait que l'unité de traitement des paquets de données contient un décodeur d'adresses (PA) qui est conçu de façon à dériver une adresse à partir de l'information contenue dans un en-tête d'un paquet de données et à en déterminer le canal de sortie (A1 ... A16) par lequel ce paquet de données doit à nouveau quitter le dispositif de connexions (40) et par le fait que le dispositif de commande (6) est en outre réalisé de façon à être amené, par l'unité de traitement (P) des paquets de données, à réaliser, pour la durée de ce paquet de données, une liaison depuis le canal d'entrée en question (E1 ...E16) jusqu'au canal de sortie en question (A1 ... A16).

3. Module de connexion selon la revendication 2, caractérisé par le fait que l'unité de traitement (P) des paquets de données présente une sortie qui, par l'intermédiaire d'éléments de connexion (PK2), peut être reliée, au choix, avec chacun des canaux de sortie (A1 ... A16), par le fait que l'unité de traitement (P) des paquets de données est en outre réalisée de façon que, sur le chemin allant du canal d'entrée en question (E1 ... E16) au canal de sortie en question (A1 ... A16), le paquet de données parcoure l'unité de traitement (P) des paquets de données et par le fait que l'unité de traitement (P) des paquets de données contient des unités fonctionnelles pour synchroniser, mémoriser en mémoire intermédiaire ou convertir les adresses.
